# EUROPEAN PATENT APPLICATION

(11) **EP 1 361 002 A2**
(43) Date of publication of application: **12.11.2003**
(21) Application number: 03250303.9
(22) Date of filing: 17.01.2003
(51) Int. Cl.: B09C 1/00, B09C 1/02, B09C 101/00

(54) **Method and apparatus for purifying a layer of contaminated soil**

(30) Priority: 10.05.2002 JP 2002136126
(71) Applicant: Tanaka Kankyo-Kaihatsu Co., Toshima-ku, Tokyo (FR); Nirei, Hisashi, Chiba-shi, Chiba (JP); Nanba, Kenji, Narashino-shi, Chiba (JP); Takeuchi, Mio, Tsukuba-shi, Ibaragi (JP); Takahashi, Asuka, Katsushika-ku, Tokyo (JP); Owaki, Masato, Ryugasaki-shi, Ibaragi (JP)
(72) Inventor: Tanaka, Takeshi, Toshima-ku, Tokyo (JP); Nirei, Hisashi, Chiba-shi, Chiba (JP); Nanba, Kenji, Narashino-shi, Chiba (JP); Takeuchi, Mio, Tsukuba-shi, Ibaragi (JP); Takahashi, Asuka, Katsushika-ku, Tokyo (JP); Owaki, Masato, Ryugasaki-shi, Ibaragi (JP)
(74) Representative: Sanderson, Michael John

(57) **Abstract**

A method for purifying a layer (1) of contaminated soil is provided, including the following steps: (a) preparing an injection well (3) for injecting a fluid (2) which has a purification capability utilizing one of physical action, chemical reaction, metabolism of microbes and promotion thereof and highly pressurized washing into the layer and (b) injecting the fluid under a high pressure at which one of the physical action, chemical reaction, metabolism of microbes and promotion thereof and highly pressurized washing can be controlled, through injection nozzles (5) provided on a first wall or a first bottom of the injection well. The method has features that the injected fluid stirs and washes the layer (1) to separate or decompose contaminants and the contaminants are eliminated by collecting the fluid containing an undecomposed portion of the contaminants in the layer through a plurality of collection wells (4).

## Description

The present invention relates to a method and an apparatus thereof for purifying in situ a layer of soil (soil layer, bedrock and groundwater) contaminated by harmful chemical materials.

Contamination of a layer of soil by not only well-known heavy metals but also volatile organochlorine chemical materials (hereinafter referred to as VOCs), for example organic solvents such as trichloroethylene and tetrachloroethylene, has recently posed a serious social problem. An apparatus for purifying a layer of contaminated soil, which makes an in situ purification feasible by utilizing biodegradation of microbes in addition to a chemical approach, has been under way such that these heavy metals and VOCs (hereinafter also referred to as contaminants) can be eliminated to be harmless effectively and efficiently.

Also a method, a combination of physical/chemical method and biological one, which can provide an easy treatment for organochlorine compound in a shorter period of time, has been attracting attention. Hopes have been put on these methods for purifying a layer of contaminated soil in situ, which do not require large-scale drilling of soil containing contaminants, transportation or burying back thereof, thereby making it feasible to perform purification at a low cost.

Specifically, some examples for the method for purification utilizing physical/chemical method and microbiological method (bioremediation) are known. One method can provide treatment for contaminated water, which is collected and protected against diffusion by a water collecting unit located downstream the flow of contaminants, utilizing a groundwater vein. One method, which also has an area for treating contaminated water downstream the flow, treats contaminants passing therethrough. The other method, which adopts injection of microbes and nutrients upstream the flow of contaminants (VOCs) and diffusing of them in a contaminated area, provides treatment for the contaminants.

However, the aforementioned methods for purifying a layer of contaminated soil utilizing groundwater are relatively a passive approach and depend on the flow of groundwater. They can be applied only to treatment for the contaminants flowing out into the groundwater, and otherwise require a large amount of time when they are applied to purification of all the contaminants by forcing them out from throughout the layer of contaminated soil. Since the flow of groundwater is neither constant nor uniform, it is difficult to collect and treat the contaminants completely. Also it is very unlikely that the injected chemical materials, microbes and nutrients diffuse throughout the layer of contaminated soil.

Further, it has commonly occurred that the chemical materials used for purification develop another contamination adversely due to complicated layer structure.

Among the aforementioned methods related to bioremediation, a method which introduces bacteria having a high decomposition capability for contaminants, biological augmentation, is likely to cause undesired diffusion of bacteria into a surrounding layer of soil, thereby resulting in harmful side effects. It would therefore be difficult to adopt this method publicly for fear of secondary contamination.

In a conventional vacuum extraction method, a level of groundwater rises due to pressure reduction in a layer of contaminated soil. This will lead to a reduction in a zone from which contaminants can be extracted by vacuum extraction in a case where the contaminants are VOCs described above, thereby resulting in low efficiency of purification. To be more specific, since it is difficult to volatilize VOCs, which exist in water in a layer of contaminated soil deep in a zone of saturation under the level of groundwater, only a portion of the layer of contaminated soil above the level of groundwater can be purified. Therefore, the deepest portion of a well for vacuum extraction has not been used efficiently

The items which are desired for treatment of a layer of soil contaminated by harmful chemical materials will now be described.

First, a purification method is desired, which enables not only complete in situ purification for a layer of contaminated soil but also prevention of the spread of secondary environmental contamination. Technique which can exert purification on the deepest layer of contaminated soil and prevent side effects caused by chemical materials and/or microbes is necessary for this method, when a fluid having a purification capability utilizing one of physical action, chemical reaction, metabolism of microbes and highly pressurized washing is injected through a well.

Second, when the fluid is injected through a well and collected through another well, it is desired that purification be performed uniformly and efficiently for a wide area of layer of contaminated soil including contamination caused by heavy metals as well.

Third, a method that can provide high solidifying purification for all the contaminants including heavy metals is desirable.

Fourth, an optimization such that highly effective destruction of a layer of contaminated soil can be achieved while the cost for associated facilities is minimized would be desired.

Fifth, a method of highly efficient collection of volatile contaminants is desired, which enables elimination of volatile contaminants remaining in a layer of soil by utilizing forced purification so that a high level of purification can be achieved.

When contaminants are volatilized from a layer of contaminated soil and the air containing the contaminants is extracted by a vacuum pump for purification of VOCs, a level of groundwater in a saturated zone rises since the pressure in the layer is reduced by the pump. Since it is difficult to volatilize the VOCs existing in water in the layer of contaminated soil under the level of groundwater in the saturated zone, only contaminated soil above the level is purified, thereby resulting in remarkably low efficiency of purification.

For this reason, it is desired, that the level of groundwater be lowered for the purification of VOCs as described later.

Sixth, a method is desired,which enables not only saving of additives and cost by reducing a total amount of fluid serving as purification medium but also prevention of secondary environmental contamination, by controlling undesired spread of the fluid. Without this method, even if a fluid serving as purification medium is water, accompanying unlimited use can lead to a waste and likely to result in spreading of secondary environmental contamination. It will also be followed by inevitable increase in cost of additives.

Seventh, a minimum number of wells should be adopted so that the cost for drilling of wells can be reduced.

Improvement for efficiency of purification is desired in collaboration with existing types of purification facilities and techniques as described in eighth to tenth items.

Eighth, an improved method taking into account an existing method for fluid washing is desirable.

Ninth, an improved method taking into account an existing high-pressure washing is desirable.

Tenth, an improved method taking into account an existing apparatus for fluid washing is desirable.

A highlighted point related to the ninth item will be described in further detail. The improved method is desired to solve the problem that a collection well can not be used efficiently to its deepest portion because only a first layer of contaminated soil above a level of groundwater is purified, leaving VOCs in a second layer of contaminated soil under the level not volatilized.

Eleventh, a structure of plant is desired that can prevent a fluid from spreading undesirably so that it can avoid secondary environmental contamination.

It would be desirable to provide a method for purification which enables complete purification for a layer of contaminated soil in situ and restraining of spread of secondary environmental contamination. Namely, to provide a method for purifying a layer of contaminated soil and an apparatus therefor which are able to avoid second effects caused by chemical materials and/or microbes when a fluid having purification capability utilizing one of physical action, chemical reaction, metabolism of microbes and highly pressurized washing is injected through a well and collected through another well.

The present invention provides a method for purifying a layer of contaminated soil including the following steps: (a) preparing an injection well for injecting a fluid which has a purification capability utilizing one of physical action, chemical reaction, metabolism of microbes and promotion thereof and highly pressurized washing into the layer and (b) injecting the fluid under a high pressure at which one of the physical action, chemical reaction, metabolism of microbes and promotion thereof and highly pressurized washing can be controlled, through injection nozzles provided on a first wall or a first bottom of the injection well. The method has features that the injected fluid stirs and washes the layer to separate or decompose contaminants and the contaminants are eliminated by collecting the fluid containing an undecomposed portion of the contaminants in the layer through a plurality of collection wells.

In this way, the contaminants which adhere to particles composing the layer such as clay or silt, or to minute particles of mudstone layer can be detoxified by one of physical action, chemical reaction, metabolism of microbes and highly pressurized washing under optimally controlled conditions.

The present invention also provides a method for purifying a layer of contaminated soil, in which the injection nozzles of injection well are movable in a vertical direction. The method includes the steps of drilling the collection wells for collecting the fluid having the purification capability and the injection well at desired intervals, rotating roles of injection and collection for the injection and collection wells, and filling an ion exchange material and an adsorption material into some of the collection wells which are judged to have a residue of contaminants made of heavy metals and others of the collection wells located in a neighborhood thereof.

Zeolite, allophone, imogolite and activated charcoal are, for example, named for the ion exchange material and adsorption material. The contaminants such as harmful heavy metals are adsorbed by the ion exchange material and adsorption material which serve as adsorbent, thereby transformed to be harmless.

In this way, when the fluid is injected through a well and collected through another well, uniform and efficient treatment of purification can be attained for a wider area of layer of contaminated soil. Further, the contaminants made of heavy metals can be treated by solidifying purification in the layer of contaminated soil in situ.

As another feature, the present invention provides a method for purifying a layer of contaminated soil, which includes the step of mixing at least one of ion exchange material, adsorption material and heavy metal contained mineral producing solution into the fluid. The contaminants containing heavy metals can thus be treated by solidifying purification in the layer of contaminated soil in situ.

As still another feature, the present invention provides a method for purifying a layer of contaminated soil, in which both of a liquid pressurized at a pressure of 20 - 500MPa and a gas pressurized at a pressure of 0.1 - 1.0MPa, or either of the liquid and the gas is injected into the injection well.

In this way, even if a layer of contaminated soil is made of clay, silt or mudstone, through which a fluid hardly penetrates, a liquid pressurized at 20 to 500MPa can fracture the layer like flakes to create uniform minute particles, thereby forcing the fluid into the layer, stirring and washing it.

In the case where a layer of soil is contaminated by VOCs, a gas pressurized at 0.1 to 1.0MPa is used, which produces bubbles by mixing with the groundwater in the layer. The bubbles can increase penetration, starring and washing effects with sparging, and raise the untreated contaminants toward the ground surface along with the liquid, thereby providing an easier treatment for detoxification of the contaminants.

The gas is mixed so that the effect of physical action, chemical reaction, metabolism of microbes or highly pressurized washing can be enhanced.

As yet another feature, the present invention provides a method for purifying a layer of contaminated soil, in which a negative pressure pump is used for extracting the fluid from the collection wells. The method enhances volatilization of volatile contaminants such as VOCs, thereby enabling an easier treatment for detoxification.

In a further feature, the present invention provides a method for purifying a layer of contaminated soil, in which the fluid collected from the collection wells are detoxified and some or all of the detoxified fluid is recycled, thereby saving the total amount of the fluid used for the treatment. The amount of chemical material and microbes will also be reduced to result in a reduction in cost. Further, if the fluid is circulated in a closed loop, it will help prevent a secondary contamination.

In a still further feature, the present invention provides a method for purifying a layer of contaminated soil, in which a horizontal distance between an absorbing port provided on a second wall or a second bottom of each of the collection wells and the injection nozzles of injection well through the layer of contaminated soil is determined to be 0.5 - 5.0m, which is based on the study conducted by the present applicants.

In a yet further feature, the present invention provides a method for purifying a layer of contaminated soil, in which detoxification of the fluid collected from the collection wells includes both a process for adsorbing the contaminants and a process of aeration, or either one of the processes. Existing techniques can be applied selectably to the method, which will make the best use of existing resources and lessen the expenses required for a business unit engaged in environmental purification.

The invention will now be described in greater detail by way of example only with reference to the accompanying drawings of which:
FIG.1 is a sectional view illustrating a layer of contaminated soil, which is used for description of an embodiment of the present invention.
FIG.2 is a sectional view showing a layer of contaminated soil, to which the present invention is applied.
FIG.3 is a conceptual figure showing the location of an injection well and collection wells.
FIG.4 shows a conceptual figure illustrating the structure of plant.
FIG.5 is a flow chart showing the order of steps for purifying a layer of contaminated soil.
FIG.6 is a plan view showing a layout and rotation of wells.
FIG.7 is a flow chart showing an order for construction taking into account the rotation of wells.
FIGS.8A - 8D are figures showing the details of collection well: FIG.8A is a conceptual figure illustrating the structure, FIG.8B is a sectional view, FIG.8C is an enlarged view showing the screen and FIG.8D is a view showing the location of slits.

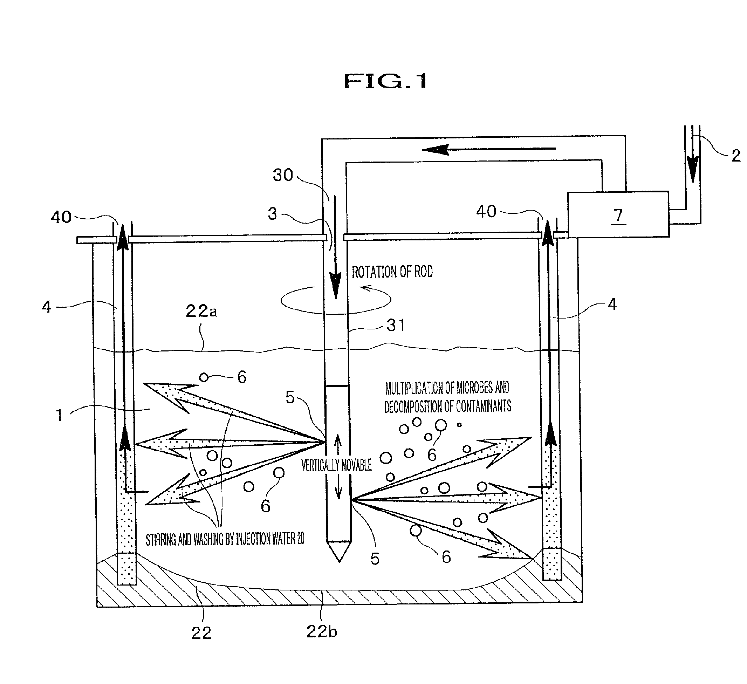

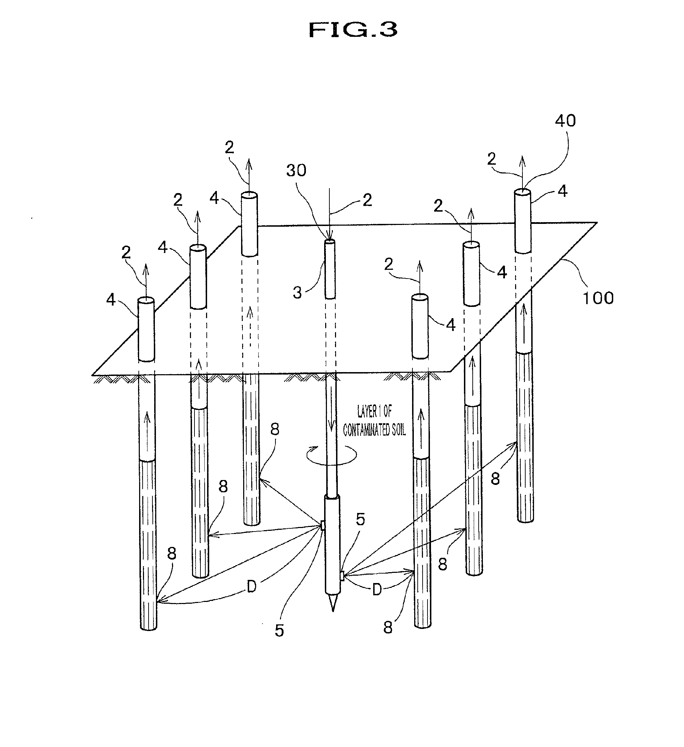

FIG.1 is a sectional view illustrating a layer of contaminated soil, which is used for description of the embodiment of present invention. An injection well 3, through which fluid 2 having purifying capability utilizing physical action, chemical reaction or metabolism of microbes is injected, and a plurality of collection wells 4 are provided by drilling a layer 1 of contaminated soil at a predetermined spacing (see FIG.3). The fluid 2 is a two-phase compound of water and air, to which a third washing medium can be added in addition to a first washing medium of water and a second washing medium of air.

The fluid 2 is injected through a plurality of injection nozzles 5 provided on a wall of injection well 3 at a pressure required for controlling of physical action, chemical reaction or metabolism of microbes. It then penetrates the layer 1 of contaminated soil, stirs and washes it, thereby separating contaminants 6 therefrom. The fluid 2 includes water of 60 to 210 litter/min pressurized at 20 to 200MPa by a pump 7 for super-high pressurization and air of 300 cubic meters/hour pressurized at 0.5 to 0.7MPa. The fluid 2 is injected into the injection well 3 at these pressures, thereby successfully penetrating the layer 1 even if it is made of clay, silt or mudstone. The pressure and amount of fluid 2 are determined desirably depending on characteristics, namely particle and solid state, groundwater and the kind of contaminants 6.

For a layer of soil contaminated by heavy metals, it is possible to purify the contaminants made of heavy metals by solidifying treatment in the layer in situ by mixing at least one of ion exchange material, adsorption material or heavy metal contained mineral producing solution into the fluid 2. Specifically, at least one of zeolite, allophane, imogolite, activated charcoal or silica alumina solution known as heavy metal contained mineral producing solution is mixed into the fluid 2. Since the ion exchange material and adsorption material serve as adsorbents for harmful materials such as heavy metals, the contaminants 6 such as heavy metals are adsorbed by them, thereby transforming the contaminants 6 to be harmless.

Even if a layer of contaminated soil is made of clay, silt or mudstone, through which the fluid 2 can not penetrate normally, it is possible for the fluid 2 to penetrate into the layer which is fractured by stirring and washing performed by injection water 20 pressurized at super-high pressure. When a layer contaminated by VOCs, the purification can be promoted by controlling the pressure of fluid 2 for encouraging physical action, chemical reaction, metabolism of microbes or the sparging effect of air described before.

A delivery pipe of pump 7 is connected airtightly to an inlet 30 located on the ground surface of injection well 3. The pressure of pump 7 and the contents of fluid 2 can be controlled by a control box (not shown). A rod 31, which is made of a metal pipe and commonly known in boring, is located in the injection well 3. The effect of stirring and washing by the injection water 20 can be enhanced by the rotation of injection nozzles 5 driven by the drilling of rod 31.

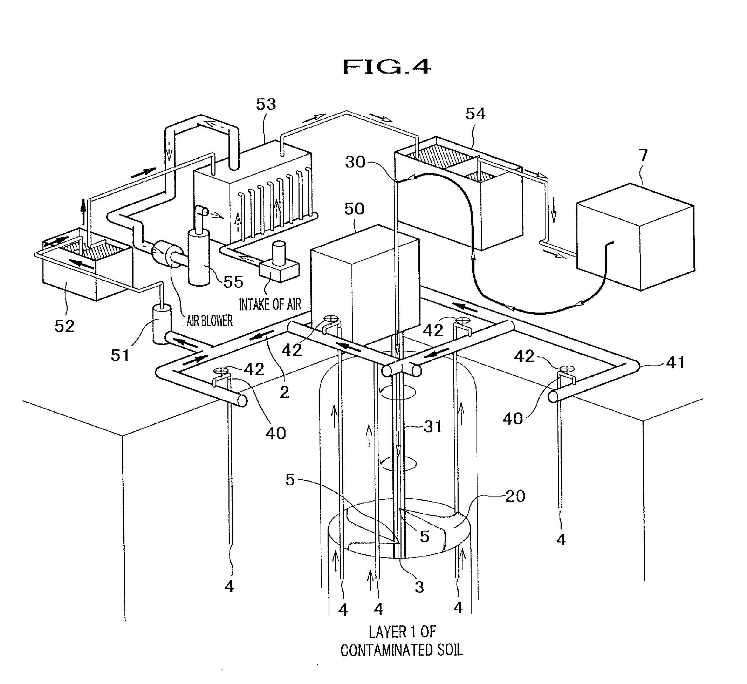

Purification utilizing physical action, chemical reaction or metabolism of microbes is controlled by stirring and washing of the layer 1 of contaminated soil performed by the injection water 20, which is injected through the injection nozzles 5. The fluid 2 including a portion of contaminants 6 which is not detoxified is collected from the collection wells 4 such that all the contaminants 6 can be eliminated from the layer 1 and then separated into the harmful and harmless materials at the ground plant (see FIG.4).

Since it is difficult to volatilize VOCs, which exist in water in the layer 1 of contaminated soil under the level of groundwater, only a portion of the layer 1 above the level of groundwater can be purified. Therefore, the deepest portion of a collection well 4 has not been used efficiently. In order to solve this difficulty, the fluid 2 of two-phase compound of water and air is injected through the injection well 3. In this way, a normal level 22a of contaminated groundwater 22 is lowered to another level 22b, and subsequently an unsaturated zone of the layer 1 of contaminated soil is extended. The purification is accordingly extended to the new unsaturated zone, which has been once a saturated zone under the level 22a containing no air. Thus, the layer contaminated by VOCs under water comes out to get exposed to air, thereby allowing deeper, wider and more efficient purification.

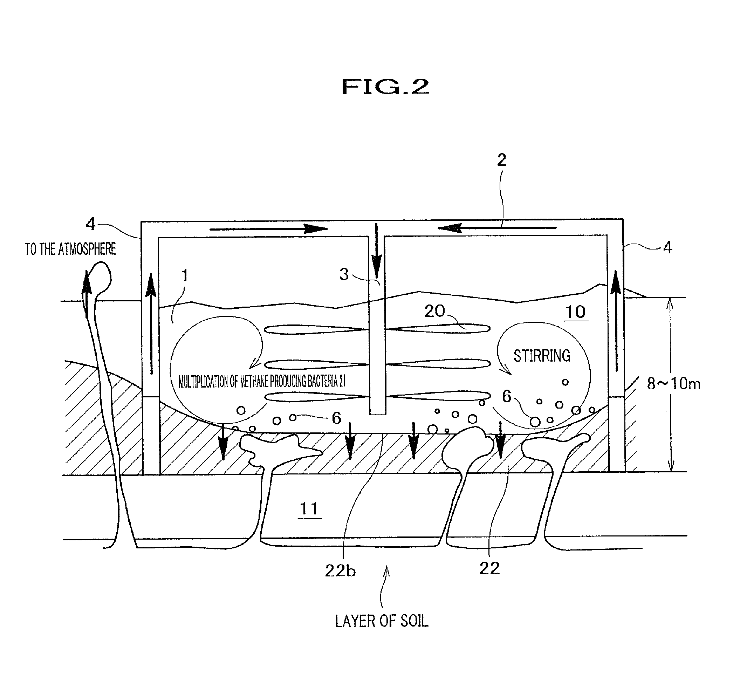

FIG.2 is a sectional view showing the layer 1 of contaminated soil, to which the present invention is applied. Methane producing bacteria 21, metabolism of which detoxifies the contaminants 6 existing in the contaminated layer 1 containing contaminated surface soil 10, live in a layer containing methane gas. It is known that some microbes can transform the contaminants 6 to be harmless by metabolism as well as the methane producing bacteria 21. For example, some microbes are added to water in a fish tank (not shown) for tropical fish to purify the water by the metabolism of microbes. Also a method similar to that of a sewage purification tank utilizing microbes is well known.

The present invention, in other words, makes it feasible to apply the global purification system of nature locally to the layer 1 of contaminated soil in an efficient way, which provides a man with an environment friendly to his healthy life, including the ecosystem of the methane producing bacteria 21, other microbes, animals and plants.

The fluid 2 is pressurized by the pump 7 at a desired pressure at which the metabolism of methane producing bacteria 21 is appropriately controlled, and injected through the injection well 3. It then penetrates and stirs the contaminated layer 1 so that the growth and metabolism of methane bacteria 21 is enhanced, thereby improving the efficiency of purification.

As shown in FIG.2, the contaminated groundwater 22, which is included in the contaminated layer 1 and collected through the collection wells 4, is circulated as it is as the washing medium of fluid 2. Natural methane producing bacteria which are included in the contaminated groundwater 22 are utilized for purification and the methane producing bacteria 21 may be added to the fluid 2 artificially if it does not contain a sufficient amount of bacteria 21. Also gas and nutrients which help enhance the metabolism of methane producing bacteria 21 may be added to the fluid 2. FIG.2 illustrates an example in which a naturally existing purification system is adopted locally for the contaminated layer 1 so that the purification can be accelerated and performed efficiently with addition of known methods for promoting the growth of methane producing bacteria 21.

FIG.3 is a conceptual figure showing the location of injection well 3 and collection wells 4. The injection well 3 and a collection well 4 are drilled (e.g. boring) on a ground 100 at desired intervals. An inlet 30 and a collection port 40 are connected to a ground plant (see FIG.4) through an injection well 3 and a collection well 4, respectively. A distance D between a nozzle 5 provided on the wall or bottom of rod 31 (see FIGS.1 and 4) and an absorbing port 8 provided on the wall or bottom of collection well 4 is set from 0.5 to 5.0m. The distance D is determined taking into account the permeability of fluid 2 provided for the contaminated layer 1. For example, the distance D is set longer for a layer of sand having good permeability and also a relatively low pressure is adopted for the fluid 2. On the other hand, the distance D is set shorter for a layer of clay, silt or mudstone having low permeability and a high pressure for the fluid 2 is adopted.

If the fluid 2 is a compound of water and air, the super-high pressure injection water 20 (see FIGS.1 and 2) with bubbles can be produced by a nozzle 5, which has a shape (not shown) capable of mixing pressurized water and air supplied thereto. In this way the injection water 20 can fracture a layer with sparging effect, thereby presenting high purification for a layer of clay, silt or mudstone which has low permeability.

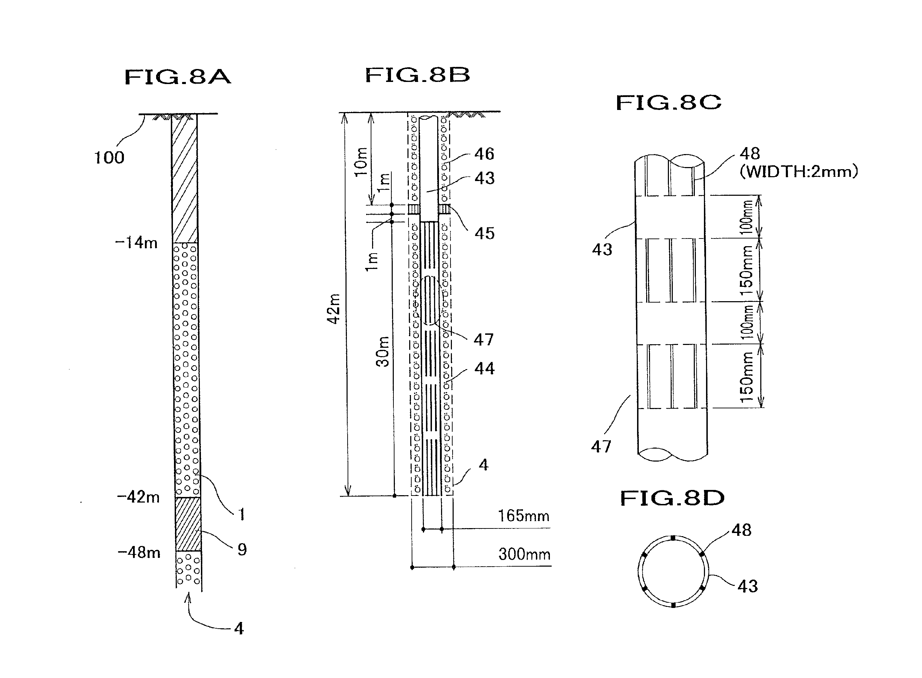

The absorbing port 8 provided on a metal pipe 43 comprises a screen 47 (see FIG.8) with a large number of slits, for example 2mm of width by 150mm of length. If a pressure difference exists through the screen 47, higher outside and lower inside of the pipe, the fluid 2 can pass therethrough. Sand 44 existing between a wall of well and the screen 47 for protection against clogging can prevent earth and sand from entering a collection well 4 undesirably. It is thus unlikely that the earth and sand fill the collection well 4 completely to force it inoperative. It is preferred that the configuration of screen 47 be selected taking into account the conditions of a layer of soil.

FIG.4 shows a conceptual figure illustrating the structure of plant. The plant, which is a mobile and reusable type, is built at the location of contaminated layer 1 and withdrawn after completion of purification for another use at a different site. Description of the plant will now be given.

The injection well 3 and collection wells 4 are drilled by a boring unit 50. The rod 31 made of a metal pipe rotates in the earth like a drill and provides stirring and washing effects for the contaminated layer 1 with sprinkler effect which is produced by the super-high pressure water 20 injected through the injection nozzles 5.

In the FIG.4, the boring unit 50 is typically connected only to the injection well 3; however the unit 50 is also used for drilling the collection wells 4 at the beginning, which can serve as an observation, collection or injection well. After completion of drilling of all the wells, the boring unit 50 is then connected only to a well used for injection, which requires a drill-like rotation of the rod 31.

If a collection port 40 of collection well 4 is not open to the atmosphere and connected to a mother collection pipe 41 through a switchable valve 42, the contamination of collected fluid 2 can be measured with an instrument which is connected to the mother collection pipe 41. A vacuum pump 51 pumps up all the fluid 2 through the collection wells 4 to a notch tank 52 made of two tanks with a cover (not shown) via the mother collection pipe 41. For the fluid 2, which includes the contaminated water containing the contaminants 6 and the contaminated gas such as VOCs, the contaminated water can be purified by eliminating the contaminants 6 in the notch tank 52 by precipitation. It may be performed in such a manner that the rough precipitation of contaminants 6 is done in a first tank and the top clear layer of liquid passing through a V-shaped cutout is collected in a second tank for another precipitation, sending another top clear layer of liquid in the second tank to an aeration unit 53. In this case addition of precipitation agent may be preferable for improvement. In the notch tank 52, flow rate of the liquid passing through the V-shaped cutout is measured using the water level indicated by the notch. The contaminated water is then sent to the aeration unit 53 and treated for detoxification. The harmful gas separated by the aeration unit 53 containing VOCs and the like is transformed to be harmless by an activated charcoal tower 55, subsequently discharged into the atmosphere. The water containing VOCs, which is detoxified in the aeration unit 53, is temporarily stored in a water tank 54 made of two tanks and then recycled.

The precipitation treatment for eliminating the contaminants 6 performed in the notch tank 52 may be alternatively done in the water tank 54, or higher precipitation for better purification can additionally be conducted in the water tank 54.

The water stored temporarily in the water tank 54 to be sufficient for continuation of the purification process, which is to be pressurized at about 200MPa and mixed with the air pressurized at about 0.5 MPa by the pump 7 of super high pressure, forming the fluid 2 latent in high level energy, is injected through the inlet 30 via the boring unit 50. The fluid 2 is then injected into the layer 1 of contaminated soil through the injection nozzles 5 provided on the wall of injection well 3 under the ground. The pressurized water and air are supplied respectively to an injection nozzle 5 and mixed together thereat, thus obtaining a highly pressurized washing effect. The fluid 2 may be made of water as a first washing medium, air as a second washing medium and at least one of ion exchange material, adsorption material or heavy metal contained mineral producing solution as a third washing medium.

The injection water 20 pressurized at super-high pressure, which has combined effect of sparging and sprinkling, produces the excellent effect of layer fracturing and washing. Therefore, the injection water 20 can exert a high washing effect on the layer 1 of contaminated soil even if it is made of clay, silt or mudstone having poor permeability. It has been demonstrated that the injection water 20 of super-high pressure and the compressed air with sparging come into contact with the contaminants 6, which are dissolved in the water and adsorbed by soil particles, thereby separating and eliminating the contaminants 6 by vaporizing them from the water and soil particles.

Since an unsaturated zone is extended as a consequence of falling of the groundwater level of saturated zone under highly pressurized conditions, the area to be purified can be increased. More specifically, VOCs, which will not be volatilized when they are contained in the groundwater, are exposed to the air to be vaporized when the level of groundwater in the contaminated layer 1 falls under the highly pressurized conditions, and thereby more efficient purification can be attained.

The operation associated with purification will now be described.

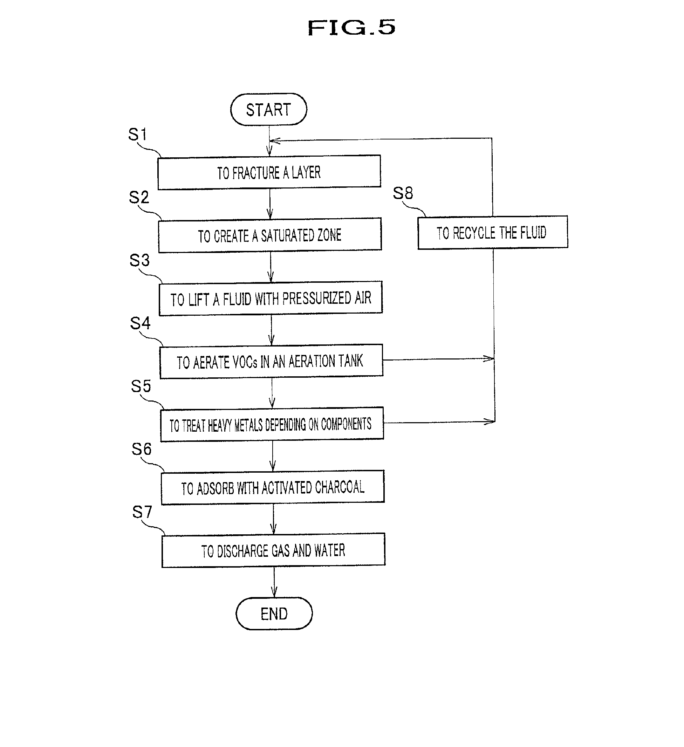

FIG.5 is a flow chart showing the order of steps for purifying the layer 1 of contaminated soil. First at step S1, even if it is made of clay, silt or mudstone, the layer 1 is fractured by the injection water 20, which is pressurized at super-high pressure and injected through the injection nozzles 5. The contaminated layer 1 thus obtains high permeability and thereby the fluid 2 is injected thereinto under high pressure conditions, assisted by the injection water 20 pressurized at super-high pressure. The injection water 20 pressurized at 20 - 200MPa mixed with 300 cubic meters/hour of air pressurized at 0.5 - 0.7MPa will make an effective fluid. It has been observed that implementation of a much higher pressure exceeding 400MPa will not improve fracturing of a layer of contaminated soil while a large amount of costs is required for the associated upgrading of facilities.

An example which has demonstrated a good result will now be described. When 20 - 30 liters/min of the injection water 20 is injected into the contaminated layer 1, a saturated zone is artificially created (step S2). The fluid 2 existing in this saturated zone is forced to leave therefrom so that the same amount as that of the injected water 20 is discharged artificially. If there is an absorbing port 8 of well 4, the fluid 2 lying in the saturated zone is collected along with the contaminants 6 to the ground surface through the absorbing port 8 and the well 4. While the fluid 2 travels the distance D between an injection nozzle 5 and an absorbing port 8, for example set to be about 2 meters, it purifies the layer 1 of contaminated soil therebetween. The distance D can be determined in the range of 0.5 - 5.0 meters depending on the characteristics of layer 1 and the type of contaminants 6.

The fluid 2 moving through the absorbing port 8 to the collection well 4 is pumped up in the collection well 4 assisted by rising of the bubbles. Also the vacuum pump 51 pumps the fluid 2 through the mother collection pipe 41, to which a plurality of wells 4 are connected (see FIG.4). Further, the pressurized air gives the collection well 4 a pumping effect, by which the fluid 2 washing an unsaturated zone of the layer 1 is pumped up (step S3). In this connection, the pressure difference between the high pressure generated by pump 7 and the negative pressure of pump 51 promotes the volatilization of volatile materials in the layer 1 of contaminated soil, thereby enabling a complete collection of residuals such as VOCs.

The fluid 2 containing VOCs collected through the fluid intake of vacuum pump 51 is aerated in the aeration tank 53 (step S4), separated into a gas containing VOCs and water without them. If it is judged that the fluid 2 is completely transformed to be harmless, it may be released (step S7). Or if recycling is judged to be more advantageous, the fluid 2 will be reused as a washing medium (step S8). For example, the detoxified water is temporarily stored in the water tank 54 and then injected again into the injection well 3 by the pump 7 of super-high pressure.

If the water free of VOCs contains heavy metals, a detoxification process is performed depending on the type of heavy metals (step S5). The process performed at S5 is a well established technique, so that further description is omitted.

While the fluid 2 containing VOCs is aerated in the aeration unit 53 (step S4), the harmful gas, which contains VOCs separated from the fluid 2, undergoes a detoxification treatment of adsorption of the harmful composites conducted in the activated charcoal tower 55 (step S6) and then is released into the atmosphere (step S7).

It is not explicitly described in the flow chart shown in FIG.5 which effect of purification a fluid has among physical action, chemical reaction, metabolism of microbes or highly pressurized washing. However, the layer 1 of contaminated soil described exemplarily in FIG.2 is assumed to contain natural methane producing bacteria, so that the fluid 2 in this case has the purification capability utilizing metabolism of microbes.

The materials which are qualified as those for physical action, chemical reaction, metabolism of microbes or highly pressurized washing will be named specifically. As nutrients for anaerobic methane producing microbes, which are different from aforementioned methane producing bacteria, generally known multiplication nutrients for methane producing microbes such as lactic acid, methanol, ethanol, ascetic acid, citric acid, pyrubic acid and polypeptone can be used.

As the multiplication nutrients for sulfate-reducing microbes, generally known nutrients such as lactic acid, methanol, ethanol, ascetic acid, citric acid, pyrubic acid, polypeptone and sugar containing organic matter can be used. Further as the multiplication nutrients for anaerobic heterotroph, organic waste water and waste itself which undertake methane fermentation, such as beer brewing wastewater, starch wastewater, dairy wastewater, sugar refinery wastewater, beer lees, bean-curd refuse and slime can be named.

As inorganic reducing agents for adding to the fluid 2, at least one material may be preferably selected from the group including reduced ion, cast iron, ion-silicon alloy, titanium alloy, zinc alloy, manganese alloy, aluminum alloy, magnesium alloy, calcium alloy and soluble compounds thereof. Under the existence of a reducing agent, reducing halogenation utilizing a combination of physical action, chemical reaction and microbes can be promoted.

It is preferred that a large amount of reduced ion and cast ion should be contained in the aforementioned reducing agents. Or at least one is preferably selected from the group made of ion-silicon alloy, titanium-silicon alloy, titanium-aluminum alloy, zinc-aluminum alloy, manganese-magnesium alloy, aluminum-zinc-calcium alloy, aluminum-tin alloy, aluminum-silicon alloy, magnesium-manganese alloy and calcium-silicon alloy.

The reducing agents may be salts made of either organic acid or hypophospheric acid and any one of ion, titanium, zinc, manganese, aluminum or magnesium.

Also it is preferred that the reducing agents should be soluble compounds as the fluid 2 usually contains water as main component.

It is recommended that an amount of reducing agent should be determined by testing in situ for respective sites in advance so that the concentration of agent can be controlled optimally for the conditions of contaminants 6.

It is not limited to the reducing agents, which are mixed into the fluid 2, but oxidants may serve as effective agents as well.

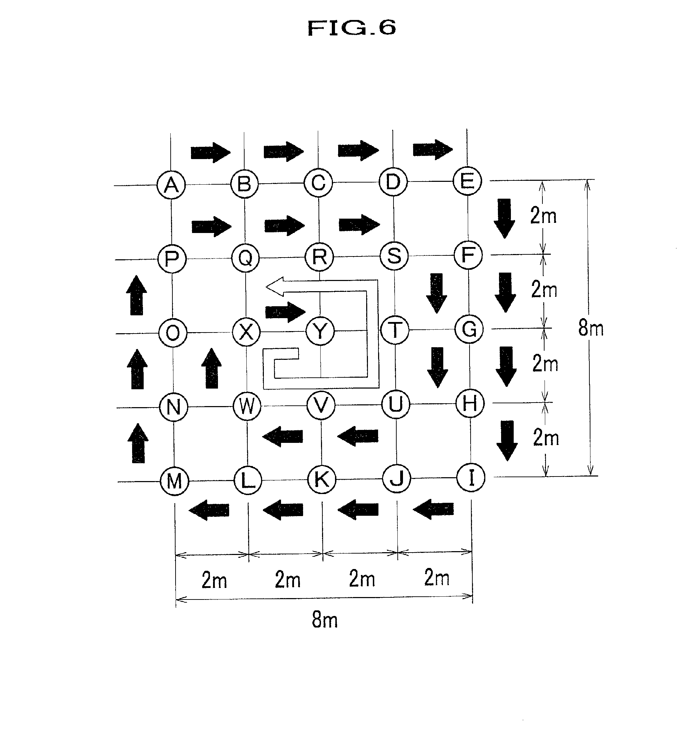

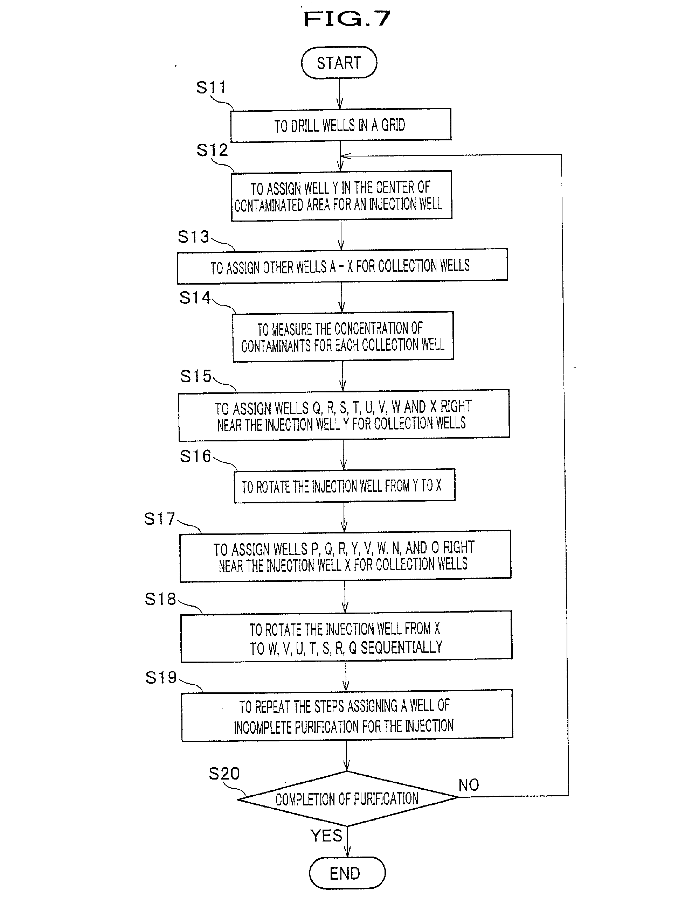

FIG.6 is a plan view showing a layout and rotation of wells. FIG.7 is a flow chart showing an order for construction taking into account the rotation of wells. The rotation of an injection well 3 and a collection well 4 will be described with reference to FIGS.6 and 7.

First, wells are drilled on the ground, under which a layer 1 of contaminated soil is expected to lie, at regular intervals of 2m in a grid pattern in the order of A, B, C - W, X, Y (step S11). The inspection can be performed by sampling the layer 1, using each of the wells A - Y as an observation well. When all the wells A through Y are drilled, the well Y is assigned for an injection well 3 (step S12). A replacement of a rod for drilling (not shown) with the rod 31, which is used for injecting the highly pressurized injection water 20 and connected to the delivery pipe of pump 7, is then made for boring unit 50.

As shown in FIG.6, the wells A - X except for Y are assigned for collection wells 4 (step S13). The details will be described later referring to FIG.8. A measurement instrument is connected to a collection port 40 of well 4 and measurement of components, concentration and distribution of contaminants 6 is conducted for the extracted fluid 2 of each of the wells A - X (step S14). An analysis such as one with photoionization detector (PID) may be used for the measurement. An optimization of the method for purification can be performed based on the results of measurement.

The wells Q, R, S, T, U, V, W and X located next to the injection well Y are assigned for collection wells 4 (step S15), which is only an example to describe a typical method for rotation.

Next the role of injection well is transferred from the well Y to the well X (step S16). And the wells P, Q, R, Y, V, W, N and O located next to the injection well X are assigned for collection wells 4 (step S17).

Subsequently, one of the wells W, V, U, T, S, R and Q is sequentially assigned for an injection well 3 in rotation (step S18). After the well Q is assigned last for an injection well 3 and the collection of fluid 2 from the corresponding collection wells A, B, C, R, Y, X, O and P is completed, the steps are repeated assigning one of the wells, which is not satisfactorily purified judging from the results of measurement, for the next injection well (step S19). The overall judgment is made for all the wells to check if the purification is completed (step S20). If the purification is not satisfactory, the steps 12 - 20 will be repeated.

FIGS.8A - 8D are figures showing the details of collection well: FIG.8A is a conceptual figure illustrating the structure, FIG.8B is a sectional view, FIG.8C is an enlarged view showing the screen and FIG.8D is a view showing the location of slits.

When a structure of earth is like one shown in FIG.8A, in which a layer 1 of contaminated soil lies in the depth of 14 to 42m that is made of different type of soil from that of an uncontaminated layer 9, the metal pipe 43 is inserted vertically into a well. Slits 48 are provided around the metal pipe 43 as shown in FIGS.8C and 8D, which can be used as screen 47 serving as absorbing port 8 (see FIG.3). The screen 47 is provided throughout the depth of 11 to 42m on the metal pipe 43. In the gap between the outer circumference of metal pipe 43 and the inner wall of well, sand 44 (e.g. silica sand) is filled for protection against clogging. A seal 45 for blocking water is laid in the depth of 10 to 11m under the ground so that the layer 1 is separated airtightly from the ground surface. The gap lying from 10m in depth to the surface ground is filled with burying soil 46.

It will be effective to prevent the leak of fluid 2 securely if an air packer (airtight cover) or screed concrete of 30cm in thickness is laid over the ground surface airtightly for the same purpose as that of seal 45.

The metal pipe 43 shown in FIG.8b, which is inserted vertically into the well, can be lifted if necessary. In the rotation of wells shown in FIG.6, a collection well is turned to an injection well and the other way around. If the results of measurement for purification performed for each well show that the contamination by heavy metals is not satisfactorily purified, ion exchange and adsorption materials are injected into the well and/or wells therearound.

The ion exchange and adsorption materials, which are omitted in FIGS.7 and 8, are put into the metal pipe 43 in powder or granule. And the metal pipe 43 may be withdrawn to the ground surface after injection of the materials deep into a well. It is not limited to this method but other methods may also be selected alternatively.

For the ion exchange and adsorption materials, zeolite, allophane, imogolite and activated charcoal are used. These ion exchange and adsorption materials, which are able to adsorb harmful materials such as heavy metals, have a capability to transform them to be harmless. In this way the method, in which the fluid 2 is injected into a well and collected through another well, can purify the large area of layer of contaminated soil uniformly and efficiently. It has an outstanding feature that the contaminants made of heavy metals can be treated by solidifying purification within the layer of contaminated soil.

The plant on the ground shown in FIG.4 is put into operation based on the steps shown in FIGS. 5 and 7. After completion of the purification of layer 1 of contaminated soil, the plant is completely withdrawn and the wells are buried to be restored to the original condition.

The contaminants made of heavy metals are adsorbed by the ion exchange and adsorption materials so that they cannot leak out to be harmless solidified in minerals.

## Claims

1. A method for purifying a layer of contaminated soil comprising the steps of:
preparing an injection well for injecting a fluid which has a purification capability utilizing one of physical action, chemical reaction, metabolism of microbes and highly pressurized washing into said layer; and
injecting said fluid under a high pressure at which one of said physical action, chemical reaction, metabolism of microbes and highly pressurized washing can be controlled, through injection nozzles provided on a first wall or a first bottom of said injection well, **characterised in that**
said injected fluid stirs and washes said layer to separate or decompose contaminants, and said contaminants are eliminated by collecting said fluid containing an undecomposed portion of said contaminants in said layer through a plurality of collection wells.

2. A method according to claim 1, wherein said injection nozzles of injection well are movable in a vertical direction,
wherein said method further comprising the steps of:
drilling said collection wells for collecting said fluid having said purification capability and said injection well at desired intervals;
rotating roles of injection and collection for said injection and collection wells; and
filling an ion exchange material and an adsorption material into some of said collection wells which are judged to have a residue of contaminants made of heavy metals and others of said collection wells located in a neighborhood thereof.

3. A method according to claim 1, or claim 2 further comprising the step of:
mixing at least one of ion exchange material, adsorption material and heavy metal contained mineral producing solution into said fluid.

4. A method according to any one of claims 1 to 3, wherein both of a liquid pressurized at a pressure of 20 - 500MPa and a gas pressurized at a pressure of 0.1 - 1.0MPa, or either of said liquid and said gas is injected into said injection well.

5. A method according to any one of claims 1 to 4, wherein a negative pressure pump is used for extracting said fluid from said collection wells.

6. A method according to any one of claims 1 to 5, wherein said fluid collected from said collection wells is detoxified and some or all of said detoxified fluid is recycled.

7. A method according to any one of claims 1 to 6, wherein a horizontal distance between an absorbing port provided on a second wall or a second bottom of each of said collection wells and said injection nozzles of injection well through said layer of contaminated soil is determined to be 0.5 - 5.0m.

8. A method according to any one of claims 1 to 7, wherein detoxifying of said fluid collected from said collection wells comprises both a process for adsorbing said contaminants and a process of aeration, or either one of said processes.

9. A method according to any one of claims 1 to 8, wherein said layer of contaminated soil and contaminated groundwater are washed by said fluid under a high pressure.

10. An apparatus for purifying a layer of contaminated soil comprising:
a fluid which has a purification capability utilizing one of physical action, chemical reaction, metabolism of microbes and highly pressurized washing:
an injection well for injecting said fluid into said layer;
a plurality of collection wells for collecting said fluid;
injection nozzles provided on a first wall or a first bottom of said injection well;
a pump for pressurizing said fluid; and
means for detoxifying contaminants, **characterised in that**:
said fluid is injected through said injection nozzles under a high pressure pressurized by said pump at which one of said physical action, chemical reaction, metabolism of microbes and highly pressurized washing can be controlled; and
said injected fluid stirs and washes said layer to separate or decompose said contaminants, and said contaminants are eliminated by collecting said fluid containing an undecomposed portion of said contaminants in said layer through said plurality of collection wells for detoxification of said undecomposed portion by said means for detoxifying contaminants.

11. An apparatus according to claim 10, wherein said means for detoxifying contaminants comprises both means for adsorbing said contaminants by activated charcoal and means for aeration, or either one of said means.

12. An apparatus according to claim 10 or claim 11, further comprising a storing tank such that some or all of said fluid can be recycled.
